# FASCICULE DE BREVET EUROPEEN

(11) **EP 2 354 745 B1**
(45) Date de publication et mention de la délivrance du brevet: **12.02.2014**
(21) Numéro de dépôt: 11305141.1
(22) Date de dépôt: 10.02.2011
(51) Int. Cl.: F28D 21/00, F28D 7/10, F23J 15/06

(54) **Installation de fumisterie pour habitat**
Hausanlage zur Rauchgasentlüftung
Domestic smoke-evacuation facility

(30) Priorité: 10.02.2010 FR 1000551
(43) Date de publication de la demande: 10.08.2011
(73) Titulaire: Poujoulat, 79360 Granzay Gript (FR)
(72) Inventeur: Thomas, Stéphane, 79460, Magne (FR); Pierre, Jean Luc, 79460, Magne (FR); Druette, Lionel, 79180, Chauray (FR)
(74) Mandataire: Michelet, Alain

(56) Documents cités:
- DE-A1- 1 917 504
- DE-A1- 2 532 152
- DE-A1- 3 327 094
- DE-A1-102008 035 407
- FR-A- 1 334 657
- US-A- 4 364 514

## Description

La présente invention concerne une installation de fumisterie pour habitat, comprenant au moins un conduit échangeur thermique du genre air/air, un circuit d'évacuation des fumées produites au sein d'un appareil de chauffage type poêle ou foyer de cheminée et un circuit d'air à chauffer, pour la récupération et la restitution d'une partie de l'énergie thermique de ces fumées.

Pour optimiser le rendement énergétique d'une cheminée ou d'un poêle installé dans une habitation individuelle, une approche consiste à récupérer au moins une partie de l'énergie thermique contenue dans les fumées produites, de manière à restituer cette énergie dans une ou plusieurs des pièces de l'habitation.

Pour cela, une solution intéressante consiste à utiliser des systèmes échangeurs thermiques du type air/air qui sont, d'une part, implantés sur le circuit d'évacuation des fumées et, d'autre part, raccordés à un circuit d'air à chauffer, assurant la récupération et la restauration de l'énergie thermique, comme décrit par exemple dans les documents US-4 364 514 ou encore DE- 33 27 094.

Or, les moyens échangeurs thermiques actuels sont de structure complexe, ou ont un rendement assez faible.

De plus, comme les échangeurs existants équipent essentiellement les inserts de cheminées, ils sont dissimulés dans une hotte ; leur structure n'est donc pas bien adaptée pour équiper un conduit visible et traversant un plafond, comme c'est le cas en particulier des conduits d'évacuation de fumée pour poêle.

D'autre part, ces solutions existantes ne comportent pas une isolation thermique optimale.

La structure de conduit échangeur thermique de l'installation de fumisterie conforme à l'invention a pour but de remédier à ces inconvénients.

Pour cela, l'installation de fumisterie selon l'invention comprend un conduit échangeur thermique comprenant:
(i) un tube central pour le cheminement des fumées, délimité par une surface intérieure et par une surface extérieure, laquelle surface intérieure définit un volume longitudinal muni de deux ouvertures d'extrémité, une ouverture amont et une ouverture aval, destinées à être raccordées respectivement à une partie amont et à une partie aval dudit circuit d'évacuation, et
(ii) un tube périphérique isolé thermiquement, au sein duquel est logé ledit tube central, lequel tube périphérique, délimité par une surface extérieure et par une surface intérieure, comporte deux bordures d'extrémité, l'une amont et l'autre aval, solidarisées de manière hermétique à l'air avec la surface extérieure dudit tube central associé, et lequel tube périphérique comporte encore au moins deux orifices débouchants qui sont ménagés à proximité d'une même desdites bordures d'extrémité,
lequel tube central et lequel tube périphérique définissent ensemble, entre eux, une chambre pour la récupération d'énergie thermique, par cheminement de l'air à chauffer autour dudit tube central et entre lesdits orifices débouchants, laquelle chambre de chauffage est munie d'éléments de cloisonnement qui sont intercalés entre lesdits orifices débouchants et agencés pour diviser longitudinalement ladite chambre de chauffage en au moins deux parties, chacune connectée à l'un desdits orifices débouchants, et connectées entre elles par au moins un passage d'air ménagé au niveau de l'autre bordure d'extrémité dudit tube périphérique, à l'opposé desdits orifices débouchants, de sorte à dévier l'air à chauffer sur la longueur de ladite chambre de chauffage ;

En outre, le tube périphérique est constitué par deux parois agencées à distance l'une de l'autre, l'une intérieure et l'autre extérieure, formant respectivement ses surfaces intérieure et extérieure, lesquelles parois définissent ensemble un volume dans lequel est introduit un matériau isolant thermique, par exemple de la laine de roche ; ces parois définissent encore une ouverture annulaire au niveau de l'une des bordures d'extrémité dudit tube périphérique, utile pour son remplissage en matériau isolant, et le tube extérieur comporte encore une partie cylindrique terminée, du côté de ladite ouverture annulaire, par une bordure d'extrémité de forme tronconique, pour optimiser le remplissage par le matériau isolant.

La partie tronconique de cette bordure d'extrémité est avantageusement constituée par deux faces tronconiques, une face intérieure et une face extérieure, orientées parallèlement ou approximativement parallèlement l'une par rapport à l'autre, qui sont formées respectivement par une bande annulaire des parois intérieure et extérieure du tube périphérique.

Un tel conduit, de structure simple, assure une surface d'échange importante et permet de récupérer efficacement la chaleur des fumées produites par l'appareil de chauffage. Cette solution technique convient bien en particulier pour équiper un poêle installé dans une pièce, l'échangeur correspondant étant visible en partie ; cet échangeur, bien isolé, peut être installé en toute sécurité à travers le plafond de la pièce correspondante, sans risque de propagation d'incendie au matériau constituant le plafond.

Selon une caractéristique de réalisation, les orifices de la chambre de chauffage se situent au niveau de la bordure d'extrémité aval du tube périphérique ; et le ou les passages formés par les éléments de cloisonnement dans la chambre de chauffage se situent au niveau de la bordure d'extrémité amont dudit tube périphérique.

Selon une autre particularité avantageuse, les éléments de cloisonnement de la chambre de chauffage sont constitués par des profilés longitudinaux qui s'étendent chacun d'une manière radiale entre les surfaces en regard des tubes, cela sur une partie de la longueur de ladite chambre de chauffage pour former le ou les passages d'air.

Dans ce cas, les éléments de cloisonnement sont avantageusement au nombre de deux, disposés de manière diamétralement opposée par rapport au tube central et selon un plan passant par l'axe longitudinal du conduit.

Encore selon une autre caractéristique, les orifices de la chambre de chauffage sont au nombre de deux, ménagés de manière coaxiale l'un par rapport à l'autre, et selon un axe orienté radialement par rapport à l'axe longitudinal du conduit.

Dans le cas où on est en présence d'une paire d'éléments de cloisonnement et d'orifices débouchants, les éléments de cloisonnement sont avantageusement agencés de sorte que leur plan soit orienté perpendiculairement par rapport à l'axe des orifices débouchants de la chambre de chauffage.

Selon un mode de réalisation particulier, l'une des bordures d'extrémité du tube périphérique, de préférence sa bordure amont, comprend (i) une face intérieure s'étendant dans un plan perpendiculaire à l'axe longitudinal du conduit, et (ii) une face extérieure de forme générale tronconique, s'éloignant de la surface extérieure du tube central de l'aval vers l'amont ; le contour extérieur de ladite face extérieure est prolongé par une couronne de finition s'étendant en regard de ladite face extérieure , dans un plan orienté perpendiculairement à l'axe dudit conduit et dont le contour intérieur s'étend à proximité de la surface extérieure du tube central pour autoriser le passage et le raccordement avec l'extrémité d'une partie amont du circuit d'évacuation.

Dans ce cas, le tube central comporte encore avantageusement un tronçon d'extrémité amont s'étendant de manière saillante par rapport à la bordure d'extrémité amont du tube périphérique.

D'autre part, les bordures d'extrémité amont et aval du tube périphérique sont chacune constituées en partie par une bande annulaire de la surface extérieure du tube central.

Le circuit pour la circulation d'air à chauffer comprend avec de préférence des moyens ventilateurs.

L'invention sera encore illustrée, sans être aucunement limitée, par la description suivante de deux modes de réalisation particuliers, en relation avec les dessins annexés, dans lesquels :
- la figure 1 représente un premier mode de réalisation du conduit échangeur thermique de l'installation de fumisterie selon l'invention, avec une coupe partielle verticale s'étendant selon un secteur angulaire ;
- la figure 2 montre le conduit échangeur de la figure 1, ici selon un plan de coupe vertical passant par son axe longitudinal et par l'axe des orifices débouchant de la chambre de chauffage ;
- la figure 3 est encore une vue du conduit échangeur thermique des figures 1 et 2, ici selon un plan de coupe horizontal orienté perpendiculairement à son axe longitudinal et passant par l'axe des orifices débouchants ;
- la figure 4 est une vue d'une partie du conduit échangeur thermique représenté sur les figures 1 à 3, montrant de manière agrandie sa bordure d'extrémité amont ;
- la figure 5 montre encore le conduit échangeur des figures 1 à 4, selon un plan de coupe vertical passant par son axe longitudinal et perpendiculairement à l'axe des orifices débouchants de sa chambre de chauffage, ce conduit étant ici raccordé aux parties amont et aval du circuit d'évacuation des fumées ;
- la figure 6 montre un second mode de réalisation du conduit échangeur thermique de l'installation de fumisterie selon l'invention, avec une coupe verticale pédagogique agencée selon un secteur angulaire de l'ordre de 90° ;
- la figure 7 correspond au conduit échangeur thermique de la figure 6, représenté avec un plan de coupe vertical passant par son axe longitudinal et perpendiculairement à l'axe des orifices débouchants de sa chambre de chauffage.

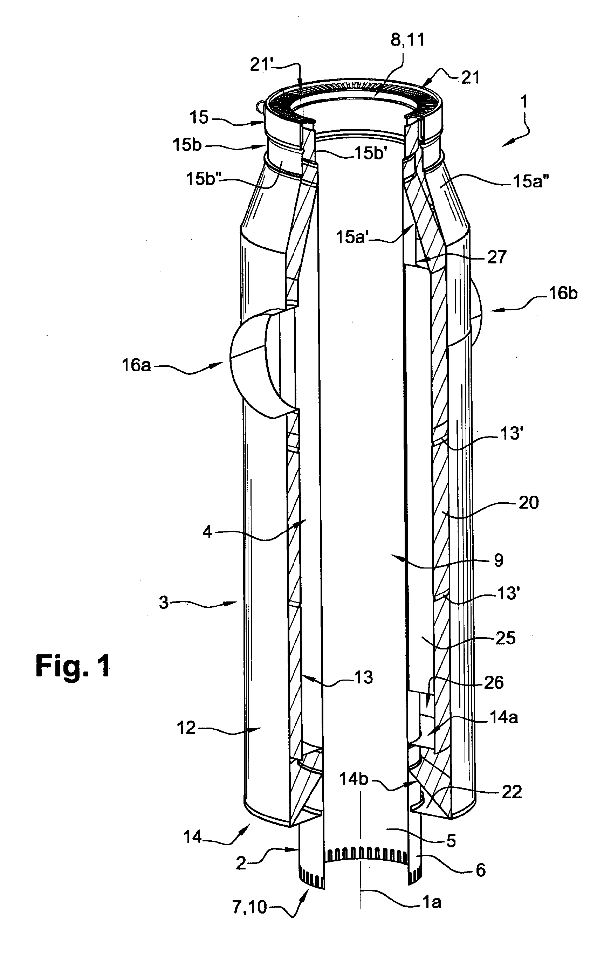

Les figures 1 à 5 représentent donc une première structure possible d'un conduit échangeur thermique de l'installation de fumisterie selon l'invention.

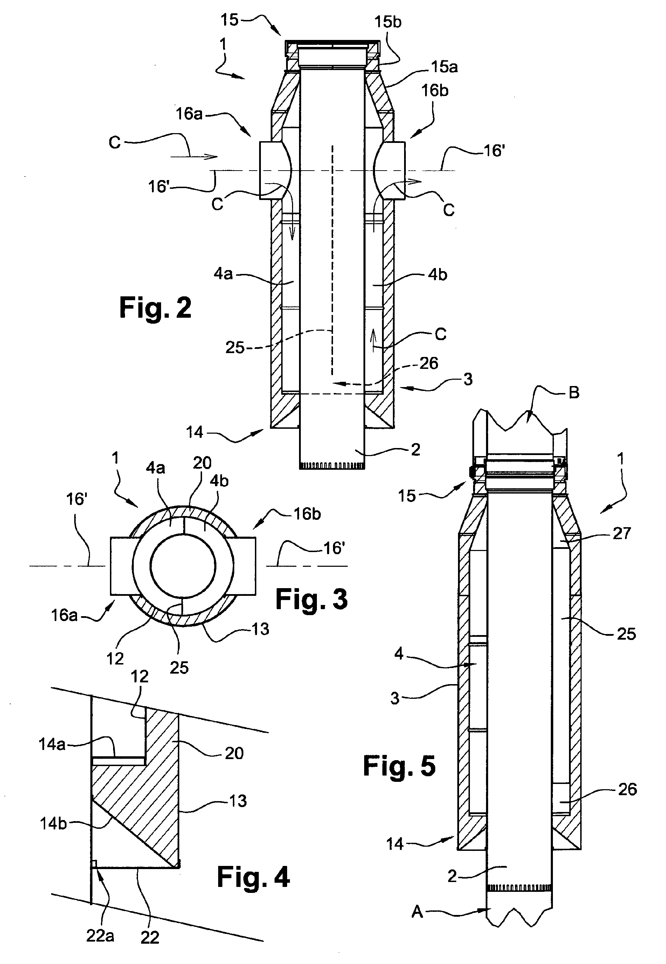

Le conduit échangeur thermique 1 équipe un circuit d'évacuation des fumées produites par un poêle (ou le foyer d'une cheminée), utilisant de préférence le bois comme combustible. Les parties amont et aval de ce circuit d'évacuation des fumées sont représentées partiellement sur la figure 5, et seront détaillées par la suite en relation avec cette figure.

Le conduit échangeur thermique 1 est raccordé à un circuit d'air à chauffer (non représenté), pour la récupération et la restitution de l'énergie thermique contenue dans les fumées.

Le conduit échangeur 1 de l'installation de fumisterie selon l'invention est du genre air/air. Il est pour cela constitué d'une paire de tubes, à savoir (i) un tube central 2, adapté pour le cheminement des fumées, et (ii) un tube périphérique 3, isolé thermiquement, dans lequel est positionné ledit tube central 2. Ces deux tubes 2, 3, agencés coaxialement l'un par rapport à l'autre, selon un axe longitudinal 1a, forment ensemble une chambre 4 pour la récupération de l'énergie thermique contenue dans les fumées produites par l'appareil de chauffage.

Dans la suite de la présente description, on utilisera les termes « amont » et « aval », tenant compte du cheminement des fumées dans le tube central 2.

Le tube central 2 consiste en une pièce tubulaire, réalisée dans un matériau non isolant thermique, par exemple en acier inoxydable.

Ce tube central 2, de forme cylindrique, est délimité par une surface intérieure 5 et par une surface extérieure 6 ; il comporte deux extrémités, l'une amont 7 et l'autre aval 8.

La surface intérieure 5 définit un volume longitudinal 9 comportant deux ouvertures d'extrémité circulaires : (i) une ouverture amont 10, ménagée au niveau de l'extrémité amont 7, et (ii) une ouverture aval 11, ménagée au niveau de l'extrémité aval 8.

Tel que détaillé par la suite en relation avec la figure 5, ces ouvertures amont 10 et aval 11 sont destinées à être raccordées au circuit d'évacuation des fumées, respectivement à une partie ou tronçon amont A, et à une partie ou tronçon aval B de ce circuit.

Le tube périphérique 3 présente également une forme générale cylindrique, et il est délimité par une surface extérieure 12 et par une surface intérieure 13.

Ce tube périphérique 3 se termine par deux bordures d'extrémité 14 et 15, formant chacune un retreint venant épouser la surface extérieure 6 du tube central 2.

En l'occurrence, le tube 3 comporte (i) une bordure d'extrémité amont 14 de forme générale tronconique et (ii) une bordure d'extrémité aval 15 en forme d'épaulement annulaire, ces bordures 14 et 15 étant agencées respectivement du côté de l'extrémité amont 7 et de l'extrémité aval 8 du tube central 2.

La forme de ces deux bordures d'extrémité 14 et 15 est adaptée notamment pour optimiser le remplissage du tube périphérique 3 en matériau isolant thermique, comme décrit plus loin.

Ces deux bordures 14 et 15 du tube périphérique 3 sont solidarisées, de manière hermétique à l'air, avec la surface extérieure 6 du tube central 2.

La surface intérieure 13 du tube périphérique 3 et la surface extérieure 6 du tube central 2, agencées en regard et à distance l'une de l'autre, définissent ensemble la chambre de chauffage 4.

Cette chambre 4 est encore délimitée, en amont et en aval, respectivement par les bordures d'extrémité 14 et 15 du tube périphérique 3.

Tel qu'illustré sur les figures 1 à 3, le tube périphérique 3 comporte encore deux orifices débouchants 16 (16a et 16b), destinés à assurer le raccordement de la chambre de chauffage 4 avec le circuit d'air à chauffer.

Les orifices débouchants 16 sont ménagés du côté d'une même bordure d'extrémité du tube périphérique 3, en l'occurrence sa bordure d'extrémité aval 15.

Ils sont agencés coaxialement l'un par rapport à l'autre selon un axe 16' qui est orienté perpendiculairement (ou autrement dit radialement) par rapport à l'axe longitudinal 1a du conduit échangeur thermique 1.

Pour optimiser ses caractéristiques d'isolation thermique, le tube périphérique 3 est constitué de deux parois tubulaires, à savoir une paroi intérieure et une paroi extérieure, définissant ensemble un volume 20 dans lequel est introduit un matériau isolant thermique.

Ce matériau isolant thermique est représenté schématiquement par des hachures sur les figures 1 à 5. Il est choisi parmi ceux adaptés à l'application envisagée ; on utilise de préférence de la laine de roche.

Les parois intérieure et extérieure du tube périphérique 3 forment respectivement ses surfaces intérieure 13 et extérieure 12.

Pour faciliter la suite de la description, ces parois intérieure et extérieure sont désignées respectivement par les repères 13 et 12, correspondant aux surfaces intérieure et extérieure qu'elles constituent.

La paroi intérieure 13 comporte, réparties sur sa hauteur, un ensemble de moulures annulaires de rigidification 13' ; ces moulures 13' s'étendent chacune dans un plan perpendiculaire à l'axe 1a du conduit échangeur thermique 1.

Les deux parois 12 et 13 du tube périphérique 3 sont agencées coaxialement et à distance l'une de l'autre.

Elles sont réalisées dans un matériau métallique approprié, par exemple de l'acier inoxydable.

Ces deux parois 12 et 13 définissent également une ouverture annulaire 21, ménagée ici au niveau de la bordure d'extrémité aval 15 du tube périphérique 3, utile pour son remplissage en matériau isolant.

De manière à optimiser ce remplissage, cette bordure d'extrémité aval 15 présente une partie annulaire 15a de forme générale tronconique, divergente de l'aval vers l'amont, et terminée ici par une partie annulaire cylindrique 15b.

Plus précisément, la partie tronconique 15a comprend deux faces tronconiques, à savoir une face intérieure 15a' et une face extérieure 15a", qui sont orientées parallèlement ou approximativement parallèlement l'une par rapport à l'autre. Ces deux faces 15a' et 15a" sont formées respectivement par une bande tronconique des parois intérieure 13 et extérieure 12 du tube périphérique 3.

La partie terminale cylindrique 15b comporte un contour intérieur épousant la surface extérieure 6 du tube central 2.

Elle est formée ici par deux tronçons cylindriques, à savoir un tronçon intérieur 15b' et un tronçon extérieur 15b", orientés parallèlement ou approximativement parallèlement l'un par rapport à l'autre. Ces deux tronçons 15b' et 15b" sont formés respectivement par une bande annulaire du tube central 2 et par une bande annulaire de la paroi extérieure 12.

D'autre part, l'ouverture annulaire d'extrémité 21 est fermée par une grille à ailettes 21', dans laquelle est ménagée une ouverture (non visible sur les figures) permettant l'insufflation de la matière isolante (laine de roche en particulier).

La bordure d'extrémité amont 14 du tube périphérique 3 présente quant à elle une forme d'épaulement annulaire orienté vers l'intérieur.

Cette bordure d'extrémité amont 14 s'étend dans un plan orienté perpendiculairement à l'axe longitudinal 1a du conduit 1, et son contour intérieur épouse une bande annulaire de la surface extérieure 6 du tube central 2.

Plus précisément, cette bordure d'extrémité amont 14 comprend :
(i) une face intérieure 14a en forme générale de couronne, s'étendant dans un plan perpendiculaire à l'axe longitudinal 1a du conduit 1, constituée par un prolongement de la paroi intérieure 13 (en forme d'élément de tôle rapporté), et
(ii) une face extérieure 14b de forme générale tronconique, s'éloignant de la surface extérieure 6 du tube central 2 de l'aval vers l'amont, constituée par un prolongement de la paroi extérieure 12 (également en forme d'élément de tôle rapporté).

Le contour extérieur de cette face extérieure 14b est ici prolongé par une couronne de finition 22 s'étendant en regard de ladite face extérieure 14b.

Cette couronne de finition 22 s'étend dans un plan perpendiculaire à l'axe 1a du conduit 1. Comme représenté en détails sur la figure 4, son contour intérieur 22a s'étend à distance de la surface extérieure 6 du tube central 2, pour préserver un passage annulaire autorisant le raccordement avec l'extrémité de la partie amont du circuit d'évacuation A, tel que détaillé par la suite en relation avec la figure 5.

Cet espace annulaire entre la couronne de finition 22 et le tube central 2 peut être de l'ordre de 2 à 5 mm.

Sur les figures 1 et 2, on remarque encore que le tube central 2 comporte un tronçon d'extrémité amont, du côté de son extrémité amont 7, s'étendant de manière saillante par rapport à la bordure d'extrémité amont 14 du tube périphérique 3, de manière à permettre le raccordement recherché avec la partie amont du circuit.

La chambre de chauffage 4 du conduit échangeur thermique 1 a une section en forme générale de couronne, et elle est munie d'éléments de cloisonnement 25 qui sont interposés (ou intercalés) entre les orifices débouchants 16, de manière à créer une chicane et dévier l'air traversant cette chambre 4, pour que cet air vienne au contact d'une surface maximale du tube central 2.

Ces éléments de cloisonnement 25 vont ainsi permettre d'optimiser les échanges thermiques entre l'air circulant dans la chambre 4 et le tube central 2 chauffé par les fumées.

Les éléments de cloisonnement 25 consistent pour cela ici en deux profilés rectilignes plats et rectangulaires, qui s'étendent chacun de manière radiale entre les surfaces en regard 6 et 13 des tubes 2 et 3.

Tel que représenté sur les figures 2 et 3, ces deux éléments de cloisonnement 25 sont disposés de manière diamétralement opposés par rapport au tube central 2, et ils s'étendent au moins approximativement dans un même plan passant par l'axe longitudinal 1a du conduit 1.

Ce plan passant par les éléments de cloisonnement 25 s'étend encore perpendiculairement par rapport à l'axe 16' des orifices débouchants 16 de la chambre de chauffage 4.

De plus, ces deux éléments de cloisonnement 25 s'étendent chacun sur une partie de la hauteur de la chambre 4 pour définir un passage d'air amont 26, délimité par la bordure amont de l'élément de cloisonnement 25 qui est située à distance de la bordure d'extrémité amont en regard 14 du tube périphérique 3.

Sur la figure 1, on remarque que les éléments de cloisonnement 25 ne s'étendent pas jusqu'à la bordure d'extrémité aval 15 du tube périphérique 3, en particulier pour des raisons de construction, du fait de la présence de la paroi tronconique 15a'.

Les éléments de cloisonnement 25 divisent ainsi longitudinalement la chambre de chauffage 4 en deux parties 4a et 4b, chacune en forme générale de demi-couronne cylindrique et connectée à l'un des orifices débouchants désignés respectivement 16a et 16b.

Ces deux parties 4a et 4b de chambre de chauffage 4 sont encore connectées entre elles par les passages d'air 26 situés au niveau de l'autre extrémité du conduit 1, par rapport aux orifices 16a et 16b.

A titre indicatif, le diamètre des orifices débouchants 16 est de 125 ou de 160 mm. Les diamètres intérieurs du tube central sont identiques à ceux des conduits de fumées habituellement employés, par exemple 155, 180, 200 ou 230 mm.

La chambre de chauffage 4 a de son coté une épaisseur radiale avantageusement comprise entre 30 et 50 mm et une hauteur comprise entre 700 et 730 mm.

L'orifice de passage d'air 26 a une aire de l'ordre de 5600 mm².

En pratique, pour générer le courant d'air traversant la chambre 4, les orifices débouchants 16a et 16b du conduit échangeur thermique 1 sont raccordés au circuit d'air à chauffer dont la structure est adaptée à l'habitation à équiper.

En l'occurrence, un premier orifice débouchant, formant orifice d'entrée d'air, peut être raccordé à un conduit comportant (i) un orifice pour prélever l'air dans la pièce d'habitation où l'appareil de chauffage est situé, et (ii) un moteur de ventilation assurant le cheminement en pulsion de l'air à chauffer au sein du circuit ; le second orifice débouchant, formant orifice de sortie d'air, est quant à lui connecté à un réseau de conduits de ventilation desservant une ou plusieurs pièces principales du logement avec l'air chauffé.

Ce circuit d'air peut également être équipé de moyens permettant la connexion à une circulation du genre double flux.

D'une manière générale, le conduit échangeur thermique 1 est installé sur un circuit d'évacuation des fumées de la manière illustrée sur la figure 5.

Pour cela, son tube central 2 est connecté, de manière étanche à l'air, avec les parties amont A et aval B de ce circuit.

La partie amont A du circuit consiste par exemple en un conduit de fumée composite métallique rigide ou un conduit de raccordement rigide.

L'extrémité de cette partie amont A est emmanchée sur la surface extérieure 6 du tube central 2, de sorte à venir se loger au travers de l'espace annulaire délimité par le contour intérieur 22a de la couronne de finition 22.

La partie aval B du circuit consiste quant à elle avantageusement en un tubage rigide isolé thermiquement.

Ce tubage comporte une extrémité à section en forme générale de U, formant partie d'emboîtement femelle, conformée pour recevoir la partie cylindrique 15b de la bordure d'extrémité aval 15 du conduit échangeur thermique 1, formant partie mâle d'emboîtement. On obtient alors une continuité d'isolation au niveau de la face externe du circuit.

Cet assemblage par emboîtement mâle/femelle est ensuite verrouillé au moyen de tout dispositif mécanique adapté, par exemple au moyen d'un collier de serrage.

Le cheminement de l'air à chauffer dans le conduit échangeur thermique 1 est représenté de manière schématique sur la figure 2, par un ensemble de flèches désignées par le repère C.

Le cheminement d'air peut être activé manuellement ou automatiquement, lorsque des fumées sont produites et cheminent au travers du tube central 2, de sorte à récupérer et restituer leur énergie thermique.

En pratique, l'air à chauffer est propulsé au travers de l'un des deux orifices débouchant 16a de la chambre 4, formant alors orifice d'entrée d'air à chauffer, situé à gauche sur la figure 2.

L'air à chauffer traverse la chambre 4, en cheminant successivement :
- de manière descendante sur la hauteur de sa première partie 4a, en direction de la bordure d'extrémité amont 14 du tube périphérique 3,
- au travers des deux passages amont 26, formés par les deux éléments de cloisonnement 25, puis
- de manière ascendante sur la hauteur de la seconde partie 4b, vers la bordure d'extrémité aval 15 du tube périphérique 3.

Au cours de ce cheminement, l'air récupère une partie de l'énergie thermique du tube central 2, lui-même chauffé par les fumées qui le traversent.

L'air chauffé ressort enfin au travers du second orifice débouchant 16b, formant alors orifice de sortie d'air chaud et situé ici à droite sur la figure 2.

Cet air chauffé est restitué dans les pièces d'habitation, en sortie du circuit d'air.

De manière particulièrement intéressante, le conduit échangeur 1 fait partie intégrante du conduit d'évacuation des fumées d'un poêle qui, de manière particulièrement intéressante, peut être un poêle à bois installé dans une pièce d'habitation, ledit conduit échangeur traversant le plafond de la pièce équipée, avec sa partie inférieure qui s'étend sous ledit plafond, et avec sa partie supérieure, munie des orifices 16a et 16b, qui s'étend au dessus de ce plafond (par exemple dans les combles de l'habitation).

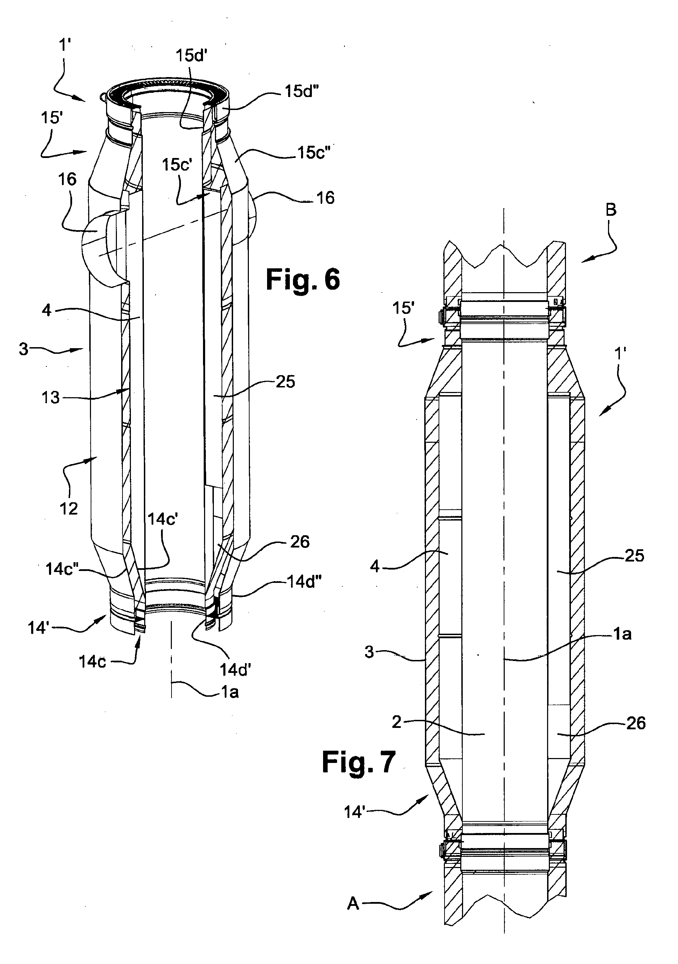

Les figures 6 et 7 représentent un second mode de réalisation possible du conduit échangeur thermique de l'installation de fumisterie selon l'invention, similaire à celui décrit ci-dessus en relation avec les figures 1 à 5.

Dans le but de faciliter la description, les repères employés pour les figures 1 à 5 sont conservés pour désigner les parties identiques ou similaires.

On retrouve l'ensemble des caractéristiques structurelles du conduit échangeur décrit en relation avec les figures 1 à 5, à savoir en particulier la chambre de chauffage 4 divisée par les éléments de cloisonnement 25 et munie des ouvertures débouchantes 16.

Le conduit échangeur thermique 1' se distingue en revanche par un tube périphérique 3 dont les bordures d'extrémités amont 14 et aval 15 sont toutes deux de forme générale extérieure tronconique.

Plus précisément, ces bordures d'extrémité amont 14' et aval 15' présentent chacune une partie annulaire 14c et 15c de forme générale tronconique, terminée par une partie annulaire cylindrique 14d et 15d.

La bordure d'extrémité amont 14' est ici identique à la bordure d'extrémité aval 15 du premier mode de réalisation.

On retrouve ainsi une partie tronconique 14c divergeant dans le sens amont vers aval ; elle comprend deux faces tronconiques, à savoir une face intérieure 14c' et une face extérieure 14c", orientées parallèlement ou approximativement parallèlement l'une par rapport à l'autre, qui sont formées respectivement par une bande annulaire des parois intérieure 13 et extérieure 12 du tube périphérique 3.

On retrouve également une partie terminale cylindrique 14d dont le contour intérieur épouse la surface extérieure 6 du tube central 2 ; cette partie 14d est formée par deux faces cylindriques, à savoir une face intérieure 14d' et une face extérieure 14d", orientées parallèlement ou approximativement parallèlement l'une par rapport à l'autre et correspondant respectivement à une bande annulaire du tube central 2 et une bande annulaire de la paroi extérieure 12.

Les parois extérieure 12 et intérieure 13 se prolongent ici au niveau de cette bordure d'extrémité amont 14' de manière à constituer un logement à section en forme générale de U, ouvert également vers l'amont.

Cette bordure d'extrémité amont 14' constitue ici l'ouverture annulaire 21, pour le remplissage du tube périphérique 3 avec le matériau isolant. Elle forme également une partie femelle d'emboîtement, destinée à recevoir l'extrémité de la partie amont A du circuit de fumées, formant partie mâle complémentaire d'emboîtement, tel que représenté sur la figure 7.

La bordure d'extrémité aval 15' du tube périphérique 3 comprend une partie tronconique 15c divergeant dans le sens aval vers amont.

Plus précisément; cette partie tronconique 15c comprend (i) une face intérieure 15c', orientée dans un plan perpendiculaire à l'axe longitudinal 1a du conduit 1, et (ii) une face extérieure tronconique 15c" ; ces faces 15c' et 15c" sont formées respectivement par une bande annulaire des parois intérieure 13 et extérieure 12 du tube périphérique 3.

La face intérieure 15c' de cette partie tronconique 15c vient ici épouser l'extrémité amont des éléments de cloisonnement 25.

La partie terminale cylindrique 15d comporte un contour intérieur épousant la surface extérieure 6 du tube central 2 ; elle est formée par deux faces cylindriques, à savoir une face intérieure 15d' et une face extérieure 15d", orientées parallèlement ou approximativement parallèlement l'une par rapport à l'autre et correspondant respectivement à une bande annulaire du tube central 2 et une bande annulaire de la paroi extérieure 12.

Ce conduit échangeur thermique 1' est monté sur un circuit d'évacuation des fumées, comme illustré par la figure 7.

En l'occurrence, la partie amont de circuit A consiste en un conduit isolé thermiquement dont l'extrémité, formant partie mâle, est rapportée par encastrement au sein de la gorge de réception 14e.

La partie aval de circuit B consiste également en un tube isolé, dont l'extrémité comporte une gorge annulaire recevant par encastrement la bordure d'extrémité aval 15' du conduit échangeur thermique 1'.

Ces deux bordures d'extrémités amont 14' et aval 15' du conduit échangeur thermique 1' sont verrouillées en position avec les extrémités correspondantes du circuit d'évacuation des fumées, par exemple au moyen de colliers de serrage adaptés.

Le conduit échangeur thermique de l'installation de fumisterie selon l'invention est de structure simple et permet une récupération efficace des calories ; il présente de nouveaux avantages, et notamment :
- évite la mise en dépression du circuit d'évacuation des fumées,
- limite la température des fumées à l'entrée du conduit de fumée,
- protège le moteur de ventilation d'éventuelles surchauffes.

L'air chaud distribué est propre, sans risque de poussières et de salissures issues du foyer.

Ce conduit échangeur est conçu notamment pour pouvoir équiper des poêles à bois dans des maisons à faibles consommations énergétiques ; la ventilation couplée à cet échangeur permet de bien répartir la chaleur de l'appareil à combustion qui, sans ce dispositif, est cantonnée dans la pièce où est situé l'appareil avec un risque de surchauffe, donc d'inconfort dans ladite pièce.

De plus, le conduit échangeur est conçu pour pouvoir être couplé à une ventilation double flux ; c'est-à-dire que les calories récupérées dans l'échangeur sont véhiculées dans l'habitation sans rajout d'un autre circuit de distribution.

## Revendications

1. Installation de fumisterie pour habitat, comprenant au moins (i) un circuit pour l'évacuation des fumées produites au sein d'un appareil de chauffage du type poêle ou foyer de cheminée, (ii) un circuit pour la circulation d'air à chauffer, et (iii) un conduit échangeur thermique du genre air/air, lequel circuit pour l'évacuation des fumées comporte un tube isolé thermiquement, entre les parties amont (A) et aval (B) duquel est implanté ledit conduit échangeur thermique raccordé audit circuit pour la circulation d'air à chauffer, de sorte à récupérer et restituer l'énergie thermique contenue dans lesdites fumées, lequel circuit échangeur thermique comprend :
(i) un tube central (2) pour le cheminement des fumées, délimité par une surface intérieure (5) et par une surface extérieure (6), laquelle surface intérieure (5) définit un volume longitudinal (9) muni de deux ouvertures d'extrémité, une ouverture amont (10) et une ouverture aval (11), destinées à être raccordées respectivement à ladite partie amont (A) et à ladite partie aval (B) dudit circuit d'évacuation, et
(ii) un tube périphérique (3), au sein duquel est logé ledit tube central (2), lequel tube périphérique (3), délimité par une surface extérieure (12) et par une surface intérieure (13), comporte deux bordures d'extrémité, l'une amont (14, 14') et l'autre aval (15, 15'), solidarisées de manière hermétique à l'air avec la surface extérieure (6) dudit tube central (2) associé, lequel tube périphérique (3) comporte encore au moins deux orifices débouchants (16) qui sont ménagés à proximité d'une desdites bordures d'extrémité (15, 15'), lequel tube central (2) et lequel tube périphérique (3) définissent ensemble, entre eux, une chambre (4) pour la récupération d'énergie thermique, par cheminement de l'air à chauffer autour dudit tube central (2) et entre lesdits orifices débouchants (16), laquelle chambre de chauffage (4) est munie d'éléments de cloisonnement (25) qui sont intercalés entre lesdits orifices débouchants (16) et agencés pour diviser longitudinalement ladite chambre de chauffage (4) en au moins deux parties (4a, 4b), chacune connectée à l'un desdits orifices débouchants (16), et connectées entre elles par au moins un passage d'air (26) ménagé au niveau de l'autre bordure d'extrémité (14, 14') dudit tube périphérique (3), à l'opposé desdits orifices débouchants (16), de sorte à dévier l'air à chauffer sur la longueur de ladite chambre de chauffage (4), **caractérisé en ce que** ledit tube périphérique (3) est constitué par deux parois (12, 13) agencées à distance l'une de l'autre, l'une intérieure (13) et l'autre extérieure (12), formant respectivement ses surfaces intérieure (13) et extérieure (12), lesquelles parois (12, 13) définissent ensemble un volume (20) dans lequel est introduit un matériau isolant thermique, lesquelles parois (12, 13) définissent encore une ouverture annulaire (21) au niveau de l'une des bordures d'extrémité (15, 14') dudit tube périphérique (3), utile pour son remplissage en matériau isolant, les deux bordures d'extrémité (14 et 15) formant chacune un rétreint venant épouser la surface extérieure (6) du tube central (2), la bordure d'extrémité (15, 14') du côté de ladite ouverture annulaire de remplissage (21) est de forme tronconique, pour optimiser son remplissage par ledit matériau isolant.

2. Installation selon la revendication 1, **caractérisée en ce que** la bordure d'extrémité tronconique (15, 14') comprend une partie tronconique (15a, 14c) constituée par deux faces tronconiques, une face intérieure (15a', 14c') et une face extérieure (15a", 14c"), orientées parallèlement ou approximativement parallèlement l'une par rapport à l'autre, qui sont formées respectivement par une bande annulaire des parois intérieure (13) et extérieure (12) du tube périphérique (3).

3. Installation selon l'une quelconque des revendications 1 ou 2, **caractérisée en ce que** les orifices (16) de la chambre de chauffage (4) se situent au niveau de la bordure d'extrémité aval (15, 15') du tube périphérique (3), et **en ce que** le ou les passages (26) formés par les éléments de cloisonnement (25) dans la chambre de chauffage (4) se situent au niveau de la bordure d'extrémité amont (14, 14') dudit tube périphérique (3).

4. Installation selon l'une quelconque des revendications 1 à 3, **caractérisée en ce que** les éléments de cloisonnement (25) sont constitués par des profilés longitudinaux s'étendant chacun d'une manière radiale entre les surfaces en regard (6, 13) des tubes (2, 3), cela sur une partie de la longueur de la chambre de chauffage (4) pour former le ou les passages d'air (26).

5. Installation selon la revendication 4, **caractérisée en ce que** les éléments de cloisonnement (25) sont au nombre de deux, disposés de manière diamétralement opposée par rapport au tube central (2) et selon un plan passant par l'axe longitudinal (1a) dudit conduit (1, 1').

6. Installation selon l'une quelconque des revendications 1 à 5, **caractérisée en ce que** les orifices (16) de la chambre de chauffage (4) sont au nombre de deux, ménagés de manière coaxiale l'un par rapport à l'autre et selon un axe (16') orienté radialement par rapport à l'axe longitudinal (1a) dudit conduit (1, 1').

7. Installation selon les revendications 5 et 6 prises en combinaison, **caractérisée en ce que** les éléments de cloisonnement (25) sont agencés de sorte que leur plan soit orienté perpendiculairement par rapport à l'axe (16') des orifices débouchants (16) de la chambre de chauffage (4).

8. Installation selon l'une quelconque des revendications 1 à 7, **caractérisée en ce qu'**un premier orifice débouchant (16a) est raccordé à un conduit comportant (i) un orifice pour prélever l'air dans la pièce d'habitation où l'appareil de chauffage est situé, et (ii) un moteur de ventilation assurant le cheminement en pulsion de l'air à chauffer au sein du circuit, le second orifice débouchant (16b) étant connecté à un réseau de conduits de ventilation desservant une ou plusieurs pièces principales du logement avec l'air chauffé.

## Patentansprüche

1. Kaminanlage für eine Wohnung, umfassend mindestens (i) einen Kreislauf für die Ableitung der Rauchgase, die innerhalb eines Heizgeräts des Typs Zimmerofen oder Kamin erzeugt werden, (ii) einen Kreislauf für die Zirkulation der zu erwärmenden Luft und (iii) eine Wärmeaustauschleitung der Art Luft/Luft, wobei der Kreislauf für die Rauchgasableitung ein thermisch isoliertes Rohr umfasst, zwischen dessen stromaufwärtigen Teil (A) und stromabwärtigen Teil (B) die Wärmeaustauschleitung eingebaut ist, die an den Kreislauf für die zu erwärmende Luft angeschlossen ist, um die in den Rauchgasen enthaltene Wärmeenergie wiederzugewinnen, wobei der Wärmeaustauschkreislauf umfasst:
(i) ein zentrales Rohr (2) für die Beförderung der Rauchgase, das durch eine innere Fläche (5) und durch eine äußere Fläche (6) begrenzt ist, wobei die innere Fläche (5) ein Längsvolumen (9) definiert, das mit zwei Endöffnungen, einer stromaufwärtigen Öffnung (10) und einer stromabwärtigen Öffnung (11) versehen ist, die dazu bestimmt sind, an den stromaufwörtigen Teil (A) bzw. den stromabwärtigen Teil (B) des Ableitungskreislaufs angeschlossen zu werden, und
(ii) ein Umfangsrohr (3), in dem das zentrale Rohr (2) angeordnet ist, wobei das Umfangsrohr (3), das durch eine äußere Fläche (12) und eine innere Fläche (13) begrenzt ist, zwei Endumrandungen umfasst, eine stromaufwärts (14, 14') und die andere stromabwärts (15, 15'), die luftdicht mit der äußeren Fläche (6) des zugehörigen Rohrs (2) verbunden sind, wobei das Umfangsrohr (3) ferner mindestens zwei Durchgangsöffnungen (16) umfasst, die in der Nähe einer der Endumrandungen (15, 15') vorgesehen sind, wobei das zentrale Rohr (2) und das Umfangsrohr (3) gemeinsam zwischen sich eine Kammer (4) für die Wiedergewinnung von Wärmeenergie durch Beförderung der zu erwärmenden Luft um das zentrale Rohr (2) und zwischen den Durchgangsöffnungen (16) definieren, wobei die Heizkammer (4) mit Trennelementen (25) versehen ist, die zwischen den Durchgangsöffnungen (16) angeordnet und derart vorgesehen sind, dass sie die Heizkammer (4) längs in mindestens zwei Teile (4a, 4b) teilen, die jeweils mit einer der Durchgangsöffnungen (16) verbunden und aneinander durch mindestens einen Luftdurchgang (26) verbunden sind, der auf Höhe der anderen Endumrandung (14, 14') des Umfangsrohrs (3) gegenüber den Durchgangsöffnungen (16) angeordnet ist, um die zu erwärmende Luft auf der Länge der Heizkammer (4) umzuleiten, **dadurch gekennzeichnet, dass** das Umfangsrohr (3) von zwei Wänden (12, 13) gebildet ist, die in einem Abstand zueinander angeordnet sind, einer inneren (13) und einer äußeren Wand (12), die seine innere (13) bzw. äußere Fläche (12) bilden, wobei die Wände (12, 13) gemeinsam ein Volumen (20) definieren, in das ein Wärmeisoliermaterial eingeleitet wird, wobei die Wände (12, 13) ferner eine ringförmige Öffnung (21) auf Höhe einer der Umfangsumrandungen (15, 14') des Umfangsrohrs (3) bilden, die für seine Befüllung mit Isoliermaterial nützlich ist, wobei die zwei Endumrandungen (14 und 15) jeweils eine Querschnittverminderung bilden, die sich an die äußere Fläche (6) des zentralen Rohrs (2) anlegt, wobei die Endumrandung (15, 14') auf der Seite der ringförmigen Befüllungsöffnung (21) eine kegelstumpfartige Form hat, um ihre Befüllung mit dem Isoliermaterial zu optimieren.

2. Anlage nach Anspruch 1, **dadurch gekennzeichnet, dass** die kegelstumpfartige Endumrandung (15, 14') einen kegelstumpfartigen Teil (15a, 14c) umfasst, der von zwei kegelstumpfartigen Seiten gebildet ist, einer Innenseite (15a', 14c') und einer Außenseite (15a'', 14c"), die parallel oder annähernd parallel zueinander ausgerichtet und jeweils von einem ringförmigen Band der Innenwand (13) und Außenwand (12) des Umfangsrohrs (3) gebildet sind.

3. Anlage nach einem der Ansprüche 1 oder 2, **dadurch gekennzeichnet, dass** sich die Öffnungen (16) der Heizkammer (4) auf Höhe der stromabwärtigen Endumrandung (15, 15') des Umfangsrohrs (3) befinden, und dass sich der oder die Durchgänge (26), die von den Trennelementen (25) in der Heizkammer (4) gebildet sind, auf Höhe der stromaufwärtigen Endumrandung (14, 14') des Umfangsrohrs (3) befinden.

4. Anlage nach einem der Ansprüche 1 bis 3, **dadurch gekennzeichnet, dass** die Trennelemente (25) von Längsprofilen gebildet sind, die sich jeweils radial zwischen den gegenüberliegenden Flächen (6, 13) der Rohre (2, 3) erstrecken, und zwar auf einem Teil der Länge der Heizkammer (4), um den oder die Luftdurchgänge (26) zu bilden.

5. Anlage nach Anspruch 4, **dadurch gekennzeichnet, dass** die Anzahl der Trennelemente (25) zwei beträgt, angeordnet diametral gegenüber dem zentralen Rohr (2) und in einer Ebene, die durch die Längsachse (1a) der Leitung (1, 1') geht.

6. Anlage nach einem der Ansprüche 1 bis 5, **dadurch gekennzeichnet, dass** die Anzahl der Öffnungen (16) der Heizkammer (4) zwei beträgt, angeordnet koaxial zueinander und entlang einer Achse (16'), die radial in Bezug zur Längsachse (1a) der Leitung (1, 1') ausgerichtet ist.

7. Anlage nach den Ansprüchen 5 und 6 in Kombination, **dadurch gekennzeichnet, dass** die Trennelemente (25) derart angeordnet sind, dass ihre Ebene senkrecht auf die Achse (16') der Durchgangsöffnungen (16) der Heizkammer (4) ausgerichtet ist.

8. Anlage nach einem der Ansprüche 1 bis 7, **dadurch gekennzeichnet, dass** die erste Durchgangsöffnung (16a) an eine Leitung angeschlossen ist, umfassend (i) eine Öffnung zur Entnahme der Luft aus der Wohnung, in der sich das Heizgerät befindet, und (ii) einen Belüftungsmotor, der die stoßweise Beförderung der zu erwärmenden Luft innerhalb des Kreislaufs gewährleistet, wobei die zweite Durchgangsöffnung (16b) an ein Netz von Belüftungsleitungen angeschlossen ist, die eine oder mehrere Haupträume der Wohnung mit der warmen Luft versorgen.

## Claims

1. A flue system for house, comprising at least (i) an exhaust circuit for the smokes produced within a heating appliance of the stove or fireplace type, (ii) a circuit for the circulation of air to be heated, and (iii) an air/air heat-exchanger duct, wherein the smoke exhaust circuit includes a thermally insulated tube, between the upstream (A) and downstream (B) parts of which is implanted said heat-exchanger duct connected to said circuit for the circulation of air to be heated, so as to collect and release the thermal energy contained in said smokes, wherein the heat-exchanger circuit comprises:
(i) a central tube (2) for the travel of the smokes, delimited by an inner surface (5) and by an outer surface (6), wherein the inner surface (5) defines a longitudinal volume (9) provided with two end openings, an upstream opening (10) and a downstream opening (11), intended to be connected to said upstream part (A) and said downstream part (B), respectively, of said exhaust circuit, and
(ii) a peripheral tube (3), within which is housed said central tube (2), wherein the peripheral tube (3), which is delimited by an outer surface (12) and by an inner surface (13), includes two end edges, an upstream one (14, 14') and a downstream one (15, 15'), airtightly fastened to the outer surface (6) of said associated central tube (2), wherein the peripheral tube (3) also includes at least two through-orifices (16) that are arranged near one of said end edges (15, 15'), wherein the central tube (2) and the peripheral tube (3) define together, between them, a chamber (4) for collecting the thermal energy, by travel of the air to be heated around said central tube (2) and between said through-orifices (16), wherein the heating chamber (4) is provided with partitioning elements (25) that are interposed between said through-orifices (16) and arranged so as to divide longitudinally said heating chamber (4) into at least two parts (4a, 4b), each connected to one of said through-orifices (16), and connected to each other by at least one air passage (26) arranged at the other end edge (14, 14') of said peripheral tube (3), opposite said through-orifices (16), so as to deviate the air to be heated over the length of said heating chamber (4), **characterized in that** said peripheral tube (3) is consisted of two walls (12, 13) arranged remote from each other, an inner one (13) and an outer one (12), forming the inner (13) and outer (12) surfaces thereof, respectively, wherein the walls (12, 13) define together a volume (20) in which is introduced a heat insulating material, wherein the walls (12, 13) also define an annular opening (21) at one of the end edges (15, 14') of said peripheral tube (3), useful for the filling thereof with the insulating material, the two end edges (14 and 15) each forming a necking that fits the outer surface (6) of the central tube (2), the end edge (15, 14') on the side of said annular filling opening (21) being of truncated-cone shape, so as to optimize the filling thereof with said insulating material.

2. The system according to claim 1, **characterized in that** the truncated-cone end edge (15, 14') comprises a truncated-cone part (15a, 14c) consisted of two truncated-cone faces, an inner face (15a', 14c') and an outer face (15a", 14c"), oriented parallel or approximately parallel to each other, that are formed by an annular band of the inner (13) and outer (12) walls, respectively, of the peripheral tube (3).

3. The system according to claim 1 or 2, **characterized in that** the orifices (16) of the heating chamber (4) are located at the downstream end edge (15, 15') of the peripheral tube (3), and **in that** the passage(s) (26) formed by the partitioning elements (25) in the heating chamber (4) are located at the upstream end edge (14, 14') of said peripheral tube (3).

4. The system according to any one of claims 1 to 3, **characterized in that** the partitioning elements (25) are consisted of longitudinal profiles each extending radially between the opposite surfaces (6, 13) of the tubes (2, 3), over a part of the length of the heating chamber (4) to form the air passage(s) (26).

5. The system according to claim 4, **characterized in that** the partitioning elements (25) are two in number, arranged diametrically opposed to each other with respect to the central tube (2) and in a plane passing by the longitudinal axis (1a) of said duct (1, 1').

6. The system according to any one of claims 1 to 5, **characterized in that** the orifices (16) of the heating chamber (4) are two in number, arranged coaxially with respect to each other and along an axis (16') oriented radially with respect to the longitudinal axis (1a) of said duct (1, 1').

7. The system according to claims 5 and 6, taken in combination, **characterized in that** the partitioning elements (25) are arranged in such a manner that their plane is oriented perpendicular with respect to the axis (16') of the through-orifices (16) of the heating chamber (4).

8. The system according to any one of claims 1 to 7, **characterized in that** a first through-orifice (16a) is connected to a duct including (i) an orifice for picking-up the air in the habitation room where the heating appliance is located, and (ii) a ventilation motor ensuring the pulsed travel of the air to be heated within the circuit, the second through-orifice (16b) being connected to a system of ventilation ducts supplying one or several main rooms of the house with the heated air.
